(19) Europäisches Patentamt / European Patent Office / Office européen des brevets

(11) **EP 4 675 581 A1**

(12) **EUROPEAN PATENT APPLICATION**

(43) Date of publication:
07.01.2026 Bulletin 2026/02

(21) Application number: 25155286.5

(22) Date of filing: **31.01.2025**

(51) International Patent Classification (IPC):
*G06V 30/146* (2022.01)   *G06V 30/148* (2022.01)
*G06V 10/82* (2022.01)   *G06V 30/414* (2022.01)

(52) Cooperative Patent Classification (CPC):
G06V 30/153; G06V 10/82; G06V 30/1475;
G06V 30/1478; G06V 30/158; G06V 30/414

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH MA MD TN

(30) Priority: 04.07.2024 KR 20240088181

(71) Applicant: Ajou University Industry-Academic
Cooperation
Foundation
Suwon-si, Gyeonggi-do (KR)

(72) Inventor: KOO, Hyungil
Suwon-si, Gyeonggi-do (KR)

(74) Representative: Jung, Minkyu
Wuesthoff & Wuesthoff
Patentanwälte und Rechtsanwalt PartG mbB
Schweigerstraße 2
81541 München (DE)

(54) **CHARACTER RECOGNITION AND DOCUMENT INTERPRETATION METHOD AND SYSTEM BASED ON LAYOUT RECOGNITION**

(57) A character recognition system includes: a character-related information extraction unit configured to include a deep learning model trained to extract character area information, inter-character space area information, interline scale information of each character, and orientation information of each character from an image including text; a word unit division recognition unit configured to obtain word division information obtained by dividing characters included in the image into word units based on the character area information and inter-character space area information; a text line recognition unit configured to recognize text lines in the image based on the character area information, interline scale information, and orientation information; a layout analysis unit configured to obtain layout information of the text included in the image based on the recognized text lines; and a character recognition unit configured to recognize each of the character included in the image and obtain text data in which the recognized characters are aligned based on the word division information and the layout information.

EP 4 675 581 A1

**Description**

BACKGROUND

1. Field

One or more embodiments relate to a character recognition method and system, and more particularly, to a method of recognizing the layout of text included in an image and providing a result of recognizing characters based on the recognized layout, thereby enabling accurate interpretation of text.

Example embodiments of the present disclosure relate to two national research and development projects. Information on one national research and development project has subject identification No. 1711197986, subject No. RS-2023-00255968, project name "Artificial Intelligence Convergence Innovation Talent Training (Ministry of Science and ICT)", and subject title "Artificial Intelligence Convergence Innovation Talent Training (Ajou University)". Information on the other national research and development project has subject identification No. 1711193301, subject No. IITP-2024-2020-0-01461, project name "University ICT Research Center Support Project", and subject title "Development of intelligent medical imaging diagnostic solutions".

2. Description of the Related Art

Optical character recognition (OCR) is a technology that converts text included in a document image, etc. into a text format that can be read by a computer, and is one of the core technologies that promotes digital transformation in each industry. This OCR technology is continuously developing, and in particular, the recognition rate and accuracy are greatly improving with the introduction of deep learning technology.

Recently, with the emergence and development of technologies such as a language model and generative AI, not only the recognition of characters in an image but also the interpretation of text content are becoming important. However, conventional OCR technology is relatively weak in recognizing the layout of text included in an image, so even if each character is accurately recognized, there are frequent cases where the recognized characters are not aligned to correspond to the layout of the text, which may cause errors in the interpretation of converted text.

SUMMARY

One or more embodiments include enabling a computing system that utilizes character recognition technology such as OCR to correctly align characters recognized from an image, thereby improving the accuracy of text interpretation.

One or more embodiments include a method capable of more accurately recognizing the layout, such as text lines, in an image.

Additional aspects will be set forth in part in the description which follows and, in part, will be apparent from the description, or may be learned by practice of the presented embodiments of the disclosure.

According to one or more embodiments, a character recognition system includes: a character-related information extraction unit configured to include a deep learning model trained to extract character area information, inter-character space area information, interline scale information of each character, and orientation information of each character from an image including text; a word unit division recognition unit configured to obtain word division information obtained by dividing characters included in the image into word units based on the character area information and inter-character space area information; a text line recognition unit configured to recognize text lines in the image based on the character area information, interline scale information, and orientation information; a layout analysis unit configured to obtain layout information of the text included in the image based on the recognized text lines; and a character recognition unit configured to recognize each of the character included in the image and obtain text data in which the recognized characters are aligned based on the word division information and the layout information.

According to an exemplary embodiment, the character area information comprises information about an area in which a character is inferred to be located from among areas in the image, the inter-character space area information comprises information obtained by inferring a space area existing between adjacent characters, the interline scale information comprises information related to spacing between text lines determined at each position of the characters, and the orientation information comprises information about an angle of a text line determined at each position of the characters.

According to an exemplary embodiment, the text line recognition unit is configured to: define respective element areas for characters determined based on the character area information; and recognize the text lines in the image based on whether the defined element areas are connected or overlapped with each other.

According to an exemplary embodiment, the text line recognition unit is configured to: define a first element area corresponding to an initial element area for each of the characters determined based on the character area information;

and cluster the characters into a text line candidate set based on whether the defined first element areas are connected or overlapped with each other, and a center position of the first element area corresponds to a center position of a corresponding character, and a rotation angle of the first element area corresponds to orientation information of the corresponding character.

According to an exemplary embodiment, the text line recognition unit is configured to: cluster the characters into a text line candidate set based on whether second element areas obtained by increasing a size of the first element areas are connected or overlapped with each other; and recognize text lines for the characters included in the image based on a clustering result.

According to an exemplary embodiment, the text line recognition unit is configured to: when the clustering result satisfies a certain condition, cluster the characters into a text line candidate set based on whether third element areas obtained by increasing a size of the second element areas are connected or overlapped with each other; and when the clustering result does not satisfy a certain condition, recognize each of clustered text line candidate sets based on the first element area as one text line.

According to an exemplary embodiment, the text line recognition unit is configured to: define a polynomial having a minimum approximation error with respect to coordinates of a center point of each of characters included in an identical text line candidate set; and determine whether a relationship between the approximation error for the defined polynomial and an average value of interline scale information of each of the characters satisfies the certain condition.

According to an exemplary embodiment, the layout analysis unit is configured to: generate paragraph information obtained by dividing paragraphs of the text in the image based on spacing between the recognized text lines; and generate line number information obtained by dividing line numbers based on a y-axis intercept and center coordinate of each of the recognized text lines, and the layout information comprises the paragraph information and the line number information.

According to one or more embodiments, a character recognition method comprising: extracting character-related information about a plurality of characters from an image including text composed of the plurality of characters; obtaining word division information obtained by dividing the plurality of characters included in the image into word units based on the extracted character-related information; recognizing text lines in the image based on the extracted character-related information; obtaining layout information of the text included in the image based on the recognized text lines; and recognizing each of the plurality of characters included in the image and obtaining text data in which the recognized characters are aligned based on the word division information and the layout information.

BRIEF DESCRIPTION OF THE DRAWINGS

Embodiments of the disclosure will be more clearly understood from the following detailed description taken in conjunction with the accompanying drawings in which:

FIG. 1 is a view illustrating a schematic configuration of a character recognition system according to an embodiment;
FIG. 2 is a view illustrating an example of a configuration of a layout recognition unit illustrated in FIG. 1;
FIG. 3 is a view illustrating an example of information extracted from an input image by a character-related information extraction unit illustrated in FIG. 2 using a character-related information extraction model;
FIGS. 4 and 5 are exemplary views visualizing information extracted through the character-related information extraction model illustrated in FIG. 3;
FIG. 6 is an exemplary view visualizing a recognition result of a word unit division recognition unit illustrated in FIG. 2;
FIGS. 7 and 8 are views for a specific explanation of a text line recognition unit illustrated in FIG. 2;
FIG. 9 is an exemplary view visualizing a text layout analysis result by a layout analysis unit illustrated in FIG. 2;
FIG. 10 is a flowchart for explaining a character recognition method according to an embodiment; and
FIG. 11 is a schematic hardware configuration block diagram of a computing device configuring a character recognition according to an embodiment.

DETAILED DESCRIPTION

Embodiments according to the inventive concept are provided to more completely explain the inventive concept to one of ordinary skill in the art, and the following embodiments may be modified in various other forms and the scope of the inventive concept is not limited to the following embodiments. Rather, these embodiments are provided so that the disclosure will be thorough and complete, and will fully convey the scope of the inventive concept to one of ordinary skill in the art.

It will be understood that, although the terms first, second, etc. may be used herein to describe various members, regions, layers, sections, and/or components, these members, regions, layers, sections, and/or components should not be limited by these terms. These terms do not denote any order, quantity, or importance, but rather are only used to distinguish one component, region, layer, and/or section from another component, region, layer, and/or section. Thus, a first member, component, region, layer, or section discussed below could be termed a second member, component, region, layer, or section without departing from the teachings of embodiments. For example, as long as within the scope of this disclosure, a first component may be named as a second component, and a second component may be named as a first component.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and will not be interpreted in an idealized or overly formal sense unless expressly so defined herein.

When a certain embodiment may be implemented differently, a specific process order may be performed differently from the described order. For example, two consecutively described processes may be performed substantially at the same time or performed in an order opposite to the described order.

The terms "unit", "device", "~er (~or)", "module", etc., refer to a processing unit of at least one function or operation, which may be implemented by hardware such as a processor, a microprocessor, an application processor, a micro controller, a central processing unit (CPU), an application processor (AP), a graphics processing unit (GPU), an accelerate processor unit (APU), a digital signal processor (DSP), an application specific integrated circuit (ASIC), a field programmable gate array (FPGA), a neural processing unit (NPU), a neuromorphic processor, etc., software, or a combination of hardware and software, and may be implemented in a form combined with a memory that stores data necessary for processing at least one function or operation.

Throughout the specification, components may be discriminated by their major functions. For example, two or more components as herein used may be combined into one, or a single component may be subdivided into two or more sub-components according to subdivided functions. Each of the components may perform its major function and further perform part or all of a function served by another component. In this way, part of a major function served by each component may be dedicated and performed by another component.

As used herein, the term "and/or" includes any and all combinations of one or more of the associated listed items.

Hereinafter, embodiments of the inventive concept will be described in detail with reference to the accompanying drawings.

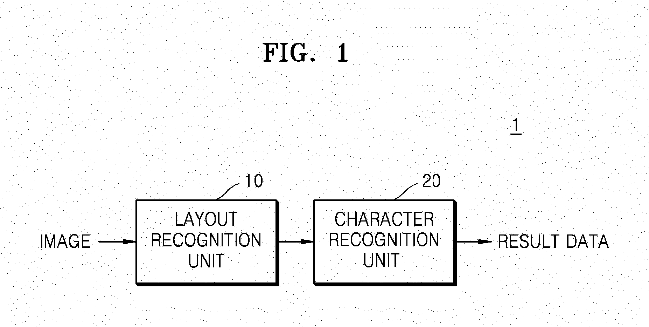

FIG. 1 is a view illustrating a schematic configuration of a character recognition system according to an embodiment.

Referring to FIG. 1, a character recognition system 1 may correspond to a system that recognizes characters included in an input image using a character recognition technology such as optical character recognition (OCR) technology and outputs text data converted into a text format. The sentence recognition system 1 may be configured to include at least one computing device. For example, each of the at least one computing device may include a hardware-based device including a processor, memory, a communication unit, an input unit, and/or an output unit. In this case, components (modules) included in the sentence recognition system 1 may be implemented as hardware, software, or a combination thereof, and may be implemented by being integrated or segmented into the at least one computing device. In addition, the components (modules) included in the sentence recognition system 1 may be implemented as a computer-readable storage medium storing at least one program according to one aspect including instructions for performing layout recognition and/or character recognition to be described later.

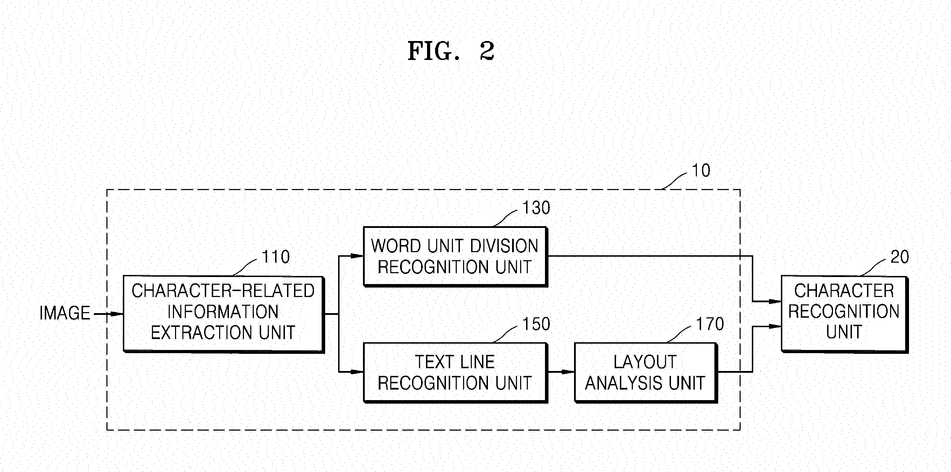

According to an embodiment, the character recognition system 1 may include a layout recognition unit 10 that recognizes the layout of text (e.g., a document) included in an input image, and a character recognition unit 20 that recognizes each character included in the image and provides text data in which the recognized characters are aligned based on the layout. The layout recognition unit 10 will be described in more detail later with reference to FIGS. 2 to 9. The character recognition unit 20 may recognize each character included in the image based on various known OCR techniques, and may recognize each character using a deep learning-based model (e.g., Tesseract engine, etc.) according to an embodiment.

That is, the character recognition system 1 according to an embodiment may recognize the layout of text included in an image, such as text lines, paragraph numbers, and line numbers, and provide text data in which characters are aligned based on the recognized layout, thereby minimizing a problem of text content not being interpreted correctly due to misalignment of the characters.

Result data output by this character recognition system 1 may include, in addition to the text data, data (paragraph numbers, line numbers, etc.) related to the layout of text in the image.

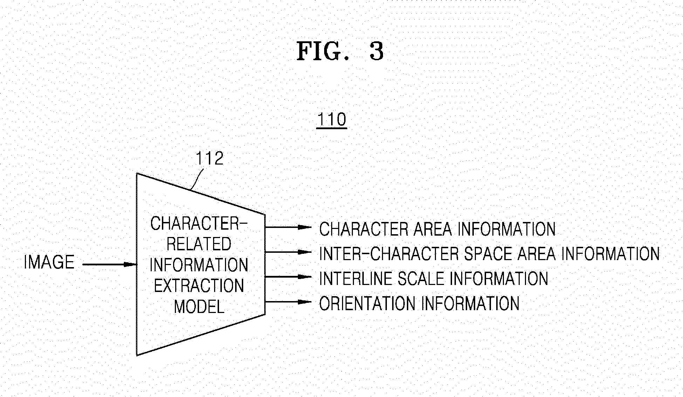

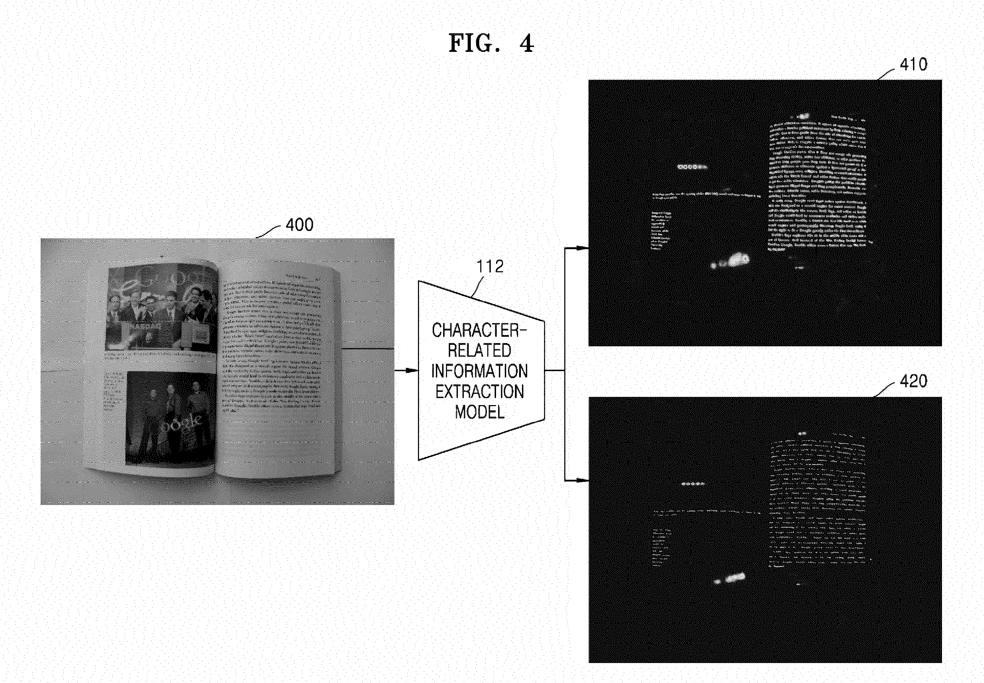

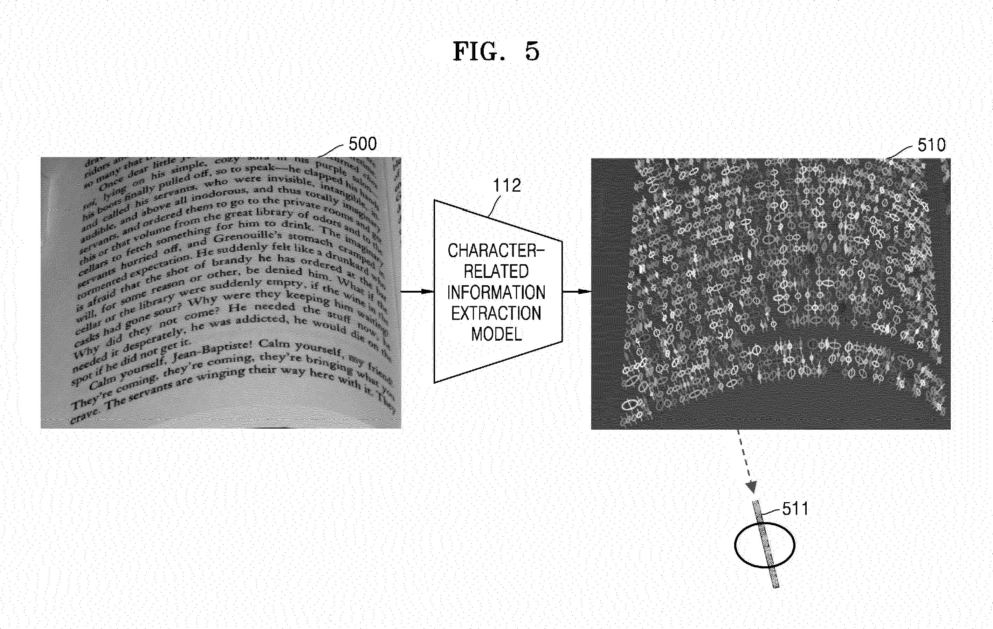

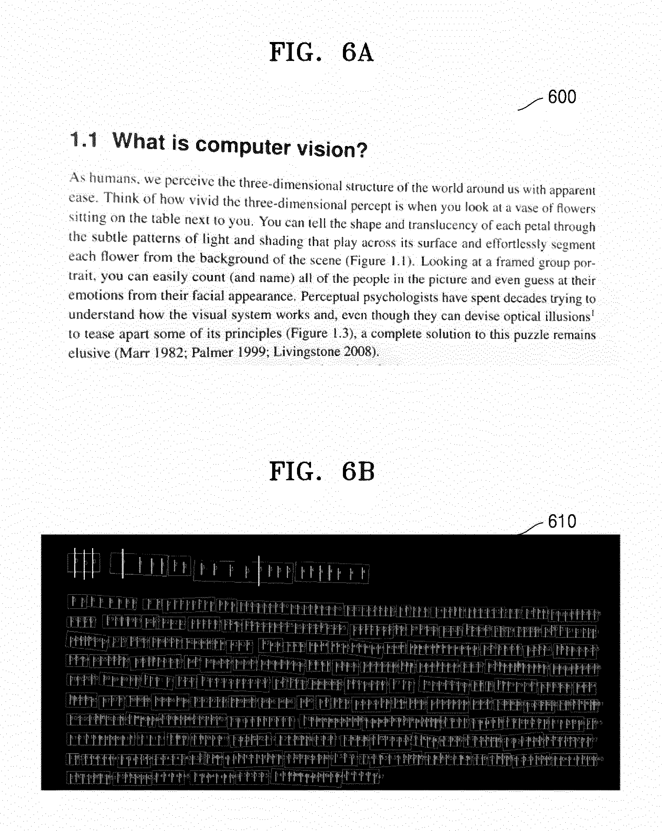

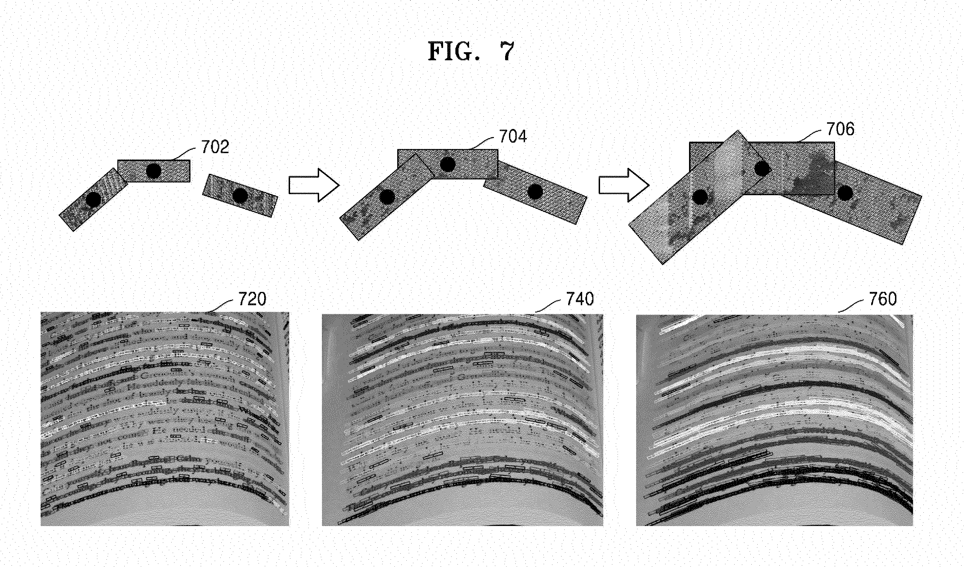

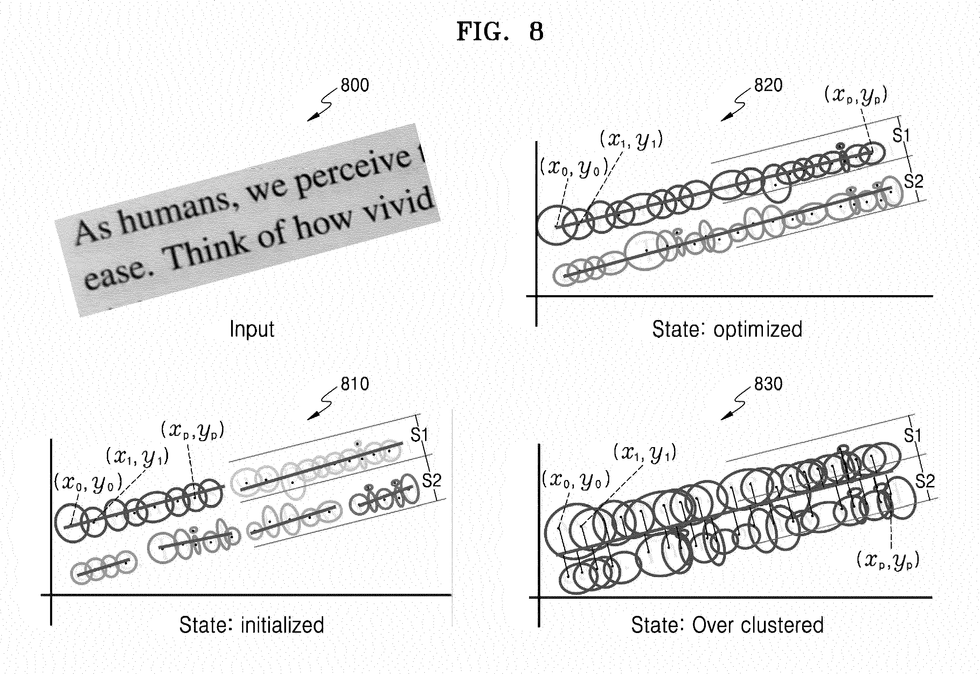

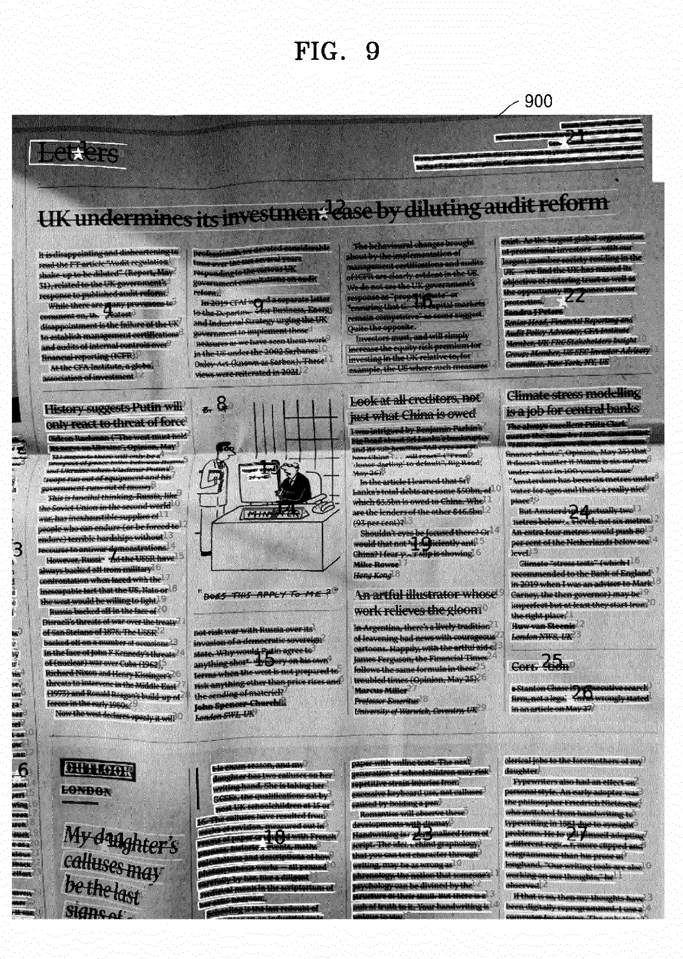

FIG. 2 is a view illustrating an example of a configuration of a layout recognition unit illustrated in FIG. 1. FIG. 3 is a view illustrating an example of information extracted from an input image by a character-related information extraction unit illustrated in FIG. 2 using a character-related information extraction model. FIGS. 4 and 5 are exemplary views visualizing information extracted through the character-related information extraction model illustrated in FIG. 3. FIG. 6 is an exemplary view visualizing a recognition result of a word unit division recognition unit illustrated in FIG. 2. FIGS. 7 and 8 are views for a specific explanation of a text line recognition unit illustrated in FIG. 2. FIG. 9 is an exemplary view visualizing a text layout analysis result by a layout analysis unit illustrated in FIG. 2.

Referring to FIG. 2, a layout recognition unit may include a character-related information extraction unit 110, a word unit division recognition unit 130, a text line recognition unit 150, and a layout analysis unit 170.

The character-related information extraction unit 110 may extract various information related to position, size, and/or direction of characters from an input image. In this regard, referring to an embodiment of FIG. 3, the character-related information extraction unit 110 may include a deep learning-based character-related information extraction model 112. For example, the character-related information extraction model 112 may be implemented through modification or fine-tuning based on various known object detection/segmentation models, etc., but is not limited thereto.

According to the embodiment, the character-related information extraction model 112 may be implemented to infer and extract character area information, inter-character space area information, interline scale information, and orientation information from an input image.

The character area information may refer to information indicating an area in which a character is inferred to be located from among areas in the input image, and the inter-character space area information may refer to information obtained by inferring a space area existing between adjacent characters. For example, the inter-character space area information may refer to information indicating a space area existing between adjacent characters on the left and right of a specific character, but is not limited thereto.

For example, the character area information may indicate a probability value (score) that each pixel corresponds to a character area, and the inter-character space area information may indicate a probability value (score) that each pixel corresponds to a space area between characters. In this case, the character area information and the inter-character space area information may be visualized in the form of heat map images 410 and 420, respectively, as illustrated in FIG. 4.

Referring to back FIG. 2, the interline scale information may indicate information related to spacing between text lines determined at each location of characters, and the orientation information may indicate information about an angle (or orientation) of a text line determined at each location of characters. For example, the interline scale information may correspond to line spacing when there is a line of text above or below each line, or correspond to a certain multiple (e.g., 2 times, etc.) of the height of text present in a line when there is no text surrounding each line. The line spacing may be determined based on the top of the text in each line.

In this regard, referring to the exemplary view of FIG. 5, a visualized image 510 obtained by visualizing interline scale information and orientation information of each character included in an image 500 is illustrated. The visualized image 510 may display the interline scale information and orientation information through an indicator 511 corresponding to each character. For example, a length of the indicator 511 may indicate a interline scale, and an angle (or direction) of the indicator 511 may correspond vertically to an angle (or direction) of a text line determined from a position of a corresponding character.

Referring back to FIG. 2, the word unit division recognition unit 130 may recognize characters included in an image as word units based on the character area information and inter-character space area information output from the character-related information extraction unit 110, and provide word division information according to a recognition result to the character recognition unit 20.

Referring to the exemplary view of FIG. 6, an image 600 shown in FIG. 6 (a) is an image input to the character recognition system 1, and an image 610 shown in FIG. 6 (b) may correspond to an image obtained by visualizing a result of recognizing characters included in the input image 600 by dividing them into word units. For example, the visualized image 610 may display a result of dividing the characters into word units in the form of a text box, and each character belonging to the same text box may be displayed with the same serial number. According to an embodiment, the visualized image 610 may also display an indicator indicating interline scale information.

Referring back to FIG. 2, the text line recognition unit 150 may recognize a text line in an input image based on information extracted from the character-related information extraction unit 110. For example, the text line recognition unit 150 may recognize a text line based on character area information, interline scale information, and orientation information extracted from the character-related information extraction unit 110.

Specific examples related to a text line recognition method of the text line recognition unit 150 will be described below with reference to FIGS. 7 and 8.

Referring to FIG. 7, the text line recognition unit 150 may define an initial element area (first element area 702) for each of characters determined based on the character area information. For example, the first element area 702 may be defined as a rectangular shape in which a horizontal length is longer than a vertical length, and may have the same size for each character. This is because a text line is generally formed in a horizontal direction, and according to an embodiment, when an image in which a text line is formed in a vertical direction is input, the first element area 702 may be defined as a rectangular shape in which a vertical length is longer than a horizontal length.

A center position of the first element area 702 may correspond to a center position of a corresponding character, and a rotation angle of the first element area 702 may correspond to orientation information (an angle or direction) of the corresponding character.

The text line recognition unit 150 may perform initial clustering for characters based on the initial element area (first element area 702) defined for each of the characters. For example, the text line recognition unit 150 may perform initial clustering by grouping characters that are connected (or overlapped) with each other in the first element area 702 into a candidate set. A first image 720 illustrated in FIG. 7 is an image obtained by visualizing a result of the initial clustering based on the first element area 702, and it can be seen that element areas of characters belonging to the same candidate set are expressed in the same color.

After the initial clustering, the text line recognition unit 150 may repeat a clustering process while increasing a size of an element area. The clustering process may be performed until a clustering result no longer satisfies a certain condition or satisfies a certain condition, and a text line recognition result may be output based on the last performed clustering result.

Referring to the exemplary view of FIG. 7, the first image 720 is an image obtained by visualizing a text line recognition result according to the result of the initial clustering, and it can be seen that there are results in which characters belonging to the same text line are recognized as belonging to different text lines because the size of the element area is small during the initial clustering.

The text line recognition unit 150 may perform the clustering process based on a second element area 704 obtained by increasing a size of the first element area 702. For example, the second element area 704 may correspond to an area obtained by increasing a horizontal size of the first element area 702, and according to an embodiment, the second element area 704 may correspond to an area obtained by increasing horizontal and vertical sizes of the first element area 702 respectively so that a width-height ratio is maintained. At this time, a center position and a rotation angle of the second element area 704 may be the same as those of the first element area 702.

The text line recognition unit 150 may cluster characters that are assumed to belong to the same text line into a candidate set based on the second element area 704 defined for each character. A second image 740 illustrated in FIG. 7 is an image obtained by visualizing a clustering result based on the second element area 704, and it can be seen that a text line is recognized more accurately than in the first image 720.

When a size of an element area continuously increases, two or more text lines may be misrecognized as the same text line. For example, when the clustering process is performed based on a third element area 706 obtained by increasing a size of the second element area 704, as in a third image 760, some text lines may be misrecognized as the same text line even though they are different text lines.

Therefore, the text line recognition unit 150 may terminate the clustering process when a clustering result no longer satisfies a certain condition (or when the clustering result satisfies a certain condition for the first time), and recognize a text line based on the final clustering result that satisfies a certain condition.

Meanwhile, shapes of the element areas described above may be defined in various ways. Referring to FIG. 8, unlike the embodiment of Fig. 7, an element area may be defined as a circle shape. For example, the text line recognition unit 150 may define an initial element area for each character to correspond to character area information extracted by the character-related information extraction unit 110. In addition, when a size of an element area increases, the text line recognition unit 150 may increase a size of a direction corresponding to the previously extracted orientation information, and according to an embodiment, the text line recognition unit 150 may increase the size while maintaining eccentricity of the element area (circle).

Looking more specifically at the embodiment of FIG. 8, the text line recognition unit 150 may define an initial element area (first element area) for each character included in an input image 800, and may cluster characters that are assumed to belong to the same text line into a candidate set depending on whether the first element areas overlap (or are connected to each other). Referring to a visualized image 810 for an initial clustering result, it can be seen that characters belonging to the same text line are recognized as belonging to different text lines. The text line recognition unit 150 performs clustering while increasing a size of an element area, and may determine whether a clustering result satisfies a condition according to mathematical expression 1 below.

【Mathematical expression 1】

$$\sqrt{\min_{f} \sum_{c_p \in \mathcal{T}} \frac{1}{|\mathcal{T}|} \left(y'_p - f(x'_p)\right)^2} \leq \frac{\bar{s}}{4}$$

In FIG. 8 and mathematical expression 1, $f$ is a k$^{th}$ order polynomial (k is a natural number), $\mathcal{T}$ is a candidate set,

and $c_p$ is each character included in candidate set $\mathcal{T}$ (p characters are included in the candidate set). $(x_p, y_p)$ is coordinates of a center point of each character $c_p$, and $(x'_p, y'_p)$ is coordinates that are rotated and transformed so that the center points are distributed along an x-axis. $\bar{s}$ may correspond to an average value $\bar{\bar{s}} = \frac{1}{|\mathcal{T}|}\sum s_p$ of interline scale information $s_p$ extracted for the characters included in the candidate set $\mathcal{T}$. That is, according to mathematical expression 1, the text line recognition unit 150 may perform an analysis on a clustering result by calculating coordinates of a center point of each character included in a candidate set, rotating and transforming the calculated coordinates of the center point so that they are distributed along the x-axis, defining a polynomial from among k$^{th}$ order polynomials that has a minimum average of approximation errors with the rotated coordinates of the center point, and determining whether an average square root of the approximation errors for the defined polynomial satisfies a certain condition (according to the example of mathematical expression 1, whether the average square root is less than 1/4 of $\bar{s}$).

The text line recognition unit 150 may repeatedly perform clustering while increasing a size of an element area until the clustering result does not satisfy the certain condition. In FIG. 8, when a clustering result 820 based on a second element area satisfies a certain condition and a clustering result 830 based on a third element area obtained by increasing a size of the second element area does not satisfy a certain condition, the text line recognition unit 150 may output a text line recognition result according to the last clustering result (the clustering result based on the second element area) that satisfies a certain condition.

FIG. 2 will be described again.

The layout analysis unit 170 may generate layout information obtained by analyzing the layout of text in the image based on the text line recognition result. For example, the layout information may include paragraph information obtained by dividing paragraphs of text in the image and line number information based on recognized text lines, but is not limited thereto.

Referring to a visualized image 900 of FIG. 9 together, the layout analysis unit 170 may generate paragraph information obtained by dividing paragraphs based on spacing between recognized text lines. According to an embodiment, the paragraph information may further include a paragraph number set for each paragraph based on a center coordinate of each of the divided paragraphs. Furthermore, the layout analysis unit 170 may also generate line number information based on a y-axis intercept and center coordinate of each of the recognized text lines.

The character recognition unit 20 may recognize each character included in an input image. In addition, the character recognition unit 20 may obtain and output text data obtained by aligning each of the recognized characters based on word division information provided from the word unit division recognition unit 130 and layout information provided from the layout analysis unit 170.

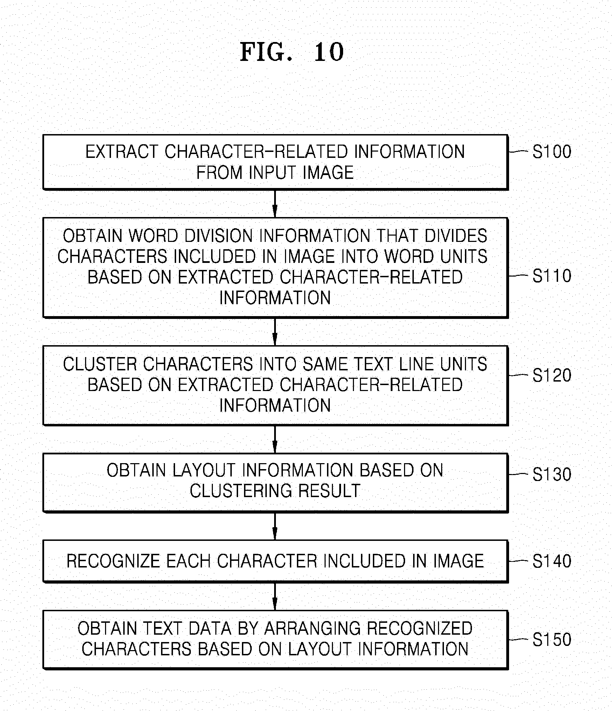

FIG. 10 is a flowchart for explaining a character recognition method according to an embodiment.

Referring to FIG. 10, the character recognition system 1, in operation S100, may extract character-related information from an input image, and in operation S110, may obtain word division information obtained by dividing characters included in the image into word units based on the extracted character-related information.

The character recognition system 1, in operation S120, may cluster the characters into the same text line units based on the extracted character-related information, and in operation S130, may obtain layout information about text included in the image based on a clustering result.

The character recognition system 1, in operation S140, may recognize each character included in the image according to a character recognition technique such as OCR, and in operation S150, may obtain and output text data by arranging the recognized characters based on the word division information and the layout information.

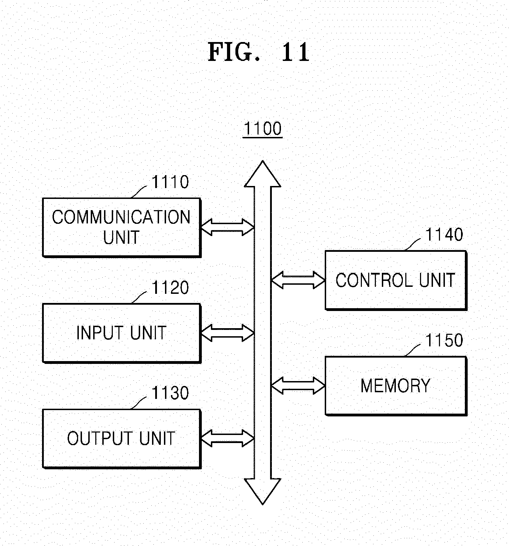

FIG. 11 is a schematic hardware configuration block diagram of a computing device configuring a character recognition according to an embodiment.

A hardware configuration of a computing device 1100 illustrated in FIG. 11 may correspond to a hardware configuration of each of at least one computing device constituting the sentence recognition system described above.

Referring to FIG. 11, the computing device 1100 may include a communication unit 1110, an input unit 1120, an output unit 1130, a control unit 1140, and a memory 1150. The control configuration illustrated in FIG. 11 is an example for convenience of explanation, and the computing device 1100 may include more or less configurations than the configuration illustrated in FIG. 11.

The communication unit 1110 may include one or more communication modules that enable communication with other terminals or servers by connecting the computing device 1100 to a network. For example, the communication module may include a mobile communication module such as LTE, 5G, etc., a wireless communication module such as Wi-Fi, and/or various other wired or wireless communication modules.

The input unit 1120 is a configuration for obtaining information such as user input, images, and audio, and may include various input devices such as various mechanical/electronic input devices, cameras, and microphones. The output unit 1130 is intended to provide information to a user by generating output related to sight, hearing, or touch, and may include a display, speaker, vibration module, etc.

The control unit 1140 may control all operations of the computing device 1100. The control unit 1140 may process signals, data, and information input or output through the components described above, or may provide certain information or functions according to various applications or algorithms stored in the memory 1150. For example, the control unit 1140 may control all processes for the character recognition method disclosed in this specification.

The control unit 1140 may include at least one processor, and/or at least one programmable circuit. For example, the control unit 2640 may be implemented as hardware such as a CPU, an AP, a micro controller unit (MCU), a GPU, an NPU, an integrated circuit, an ASIC, an FPGA, etc.

The memory 1150 may store programs and data required for the operations of the computing device 1100. In addition, the memory 1150 may store data generated or obtained through the control unit 1140. The memory 1150 may be composed of a storage medium such as read-only memory (ROM), random-access memory (RAM), flash memory, solid state disk (SSD), or hard disk drive (HDD), or a combination of storage media.

The embodiments described above may be implemented as computer-readable code on a program-recorded medium. The non-transitory computer-readable medium includes all types of recording devices that store data that can be read by a computer system. Examples of the non-transitory computer-readable medium include HDD, SSD, silicon disk drive (SDD), ROM, RAM, compact disc-read only memory (CD-ROM), magnetic tape, floppy disk, optical data storage device, etc.

A character recognition method according to the inventive concept, unlike conventional character recognition technology, recognizes the layout of text in an image and provides text data in which characters are aligned based on the recognized layout, thereby improving the accuracy of text interpretation.

In addition, the character recognition method utilizes a character-related information extraction model trained to extract interline scale information and orientation information for each character included in an image, thereby enabling text lines in a document to be accurately distinguished and recognized.

Effects obtainable by the inventive concept are not limited to the effects described above, and other effects not described herein may be clearly understood by one of ordinary skill in the art to which the disclosure belongs from the above description.

While the disclosure has been particularly shown and described with reference to embodiments thereof, it will be understood that various changes in form and details may be made therein without departing from the spirit and scope of the following claims.

In addition, it will be apparent to one of ordinary skill in the art that various changes and modifications are possible within a range that does not deviate from the basic principles of the disclosure.

**Claims**

1. A character recognition system including at least one computing device, the character recognition system comprising:

   a character-related information extraction unit configured to include a deep learning model trained to extract character area information, inter-character space area information, interline scale information of each character, and orientation information of each character from an image including text;
   a word unit division recognition unit configured to obtain word division information obtained by dividing characters included in the image into word units based on the character area information and inter-character space area information;
   a text line recognition unit configured to recognize text lines in the image based on the character area information, interline scale information, and orientation information;
   a layout analysis unit configured to obtain layout information of the text included in the image based on the recognized text lines; and
   a character recognition unit configured to recognize each of the character included in the image and obtain text data in which the recognized characters are aligned based on the word division information and the layout information.

2. The character recognition system of claim 1, wherein the character area information comprises information about an area in which a character is inferred to be located from among areas in the image,

   the inter-character space area information comprises information obtained by inferring a space area existing between adjacent characters,

the interline scale information comprises information related to spacing between text lines determined at each position of the characters, and

the orientation information comprises information about an angle of a text line determined at each position of the characters.

3. The character recognition system of claim 1 or 2, wherein the text line recognition unit is configured to:

define respective element areas for characters determined based on the character area information; and recognize the text lines in the image based on whether the defined element areas are connected or overlapped with each other.

4. The character recognition system of any one of claims 1 to 3, wherein the text line recognition unit is configured to:

define a first element area corresponding to an initial element area for each of the characters determined based on the character area information; and cluster the characters into a text line candidate set based on whether the defined first element areas are connected or overlapped with each other, wherein a center position of the first element area corresponds to a center position of a corresponding character, and a rotation angle of the first element area corresponds to orientation information of the corresponding character.

5. The character recognition system of any one of claims 1 to 4, wherein the text line recognition unit is configured to:

cluster the characters into a text line candidate set based on whether second element areas obtained by increasing a size of the first element areas are connected or overlapped with each other; and recognize text lines for the characters included in the image based on a clustering result.

6. The character recognition system of claim 4 or 5, wherein the text line recognition unit is configured to:

when the clustering result satisfies a certain condition, cluster the characters into a text line candidate set based on whether third element areas obtained by increasing a size of the second element areas are connected or overlapped with each other; and when the clustering result does not satisfy a certain condition, recognize each of clustered text line candidate sets based on the first element area as one text line.

7. The character recognition system of any one of claims 1 to 6, wherein the text line recognition unit is configured to:

define a polynomial having a minimum approximation error with respect to coordinates of a center point of each of characters included in an identical text line candidate set; and determine whether a relationship between the approximation error for the defined polynomial and an average value of interline scale information of each of the characters satisfies the certain condition.

8. The character recognition system of any one of claims 1 to 7, wherein the layout analysis unit is configured to:

generate paragraph information obtained by dividing paragraphs of the text in the image based on spacing between the recognized text lines; and generate line number information obtained by dividing line numbers based on a y-axis intercept and center coordinate of each of the recognized text lines, wherein the layout information comprises the paragraph information and the line number information.

9. A character recognition method comprising:

extracting character-related information about a plurality of characters from an image including text composed of the plurality of characters; obtaining word division information obtained by dividing the plurality of characters included in the image into word units based on the extracted character-related information; recognizing text lines in the image based on the extracted character-related information; obtaining layout information of the text included in the image based on the recognized text lines; and

recognizing each of the plurality of characters included in the image and obtaining text data in which the recognized characters are aligned based on the word division information and the layout information.

10. The character recognition method of claim 9, wherein the character-related information comprises:

character area information including information about an area in which characters are inferred to be located from among areas in the image;
inter-character space area information including information obtained by inferring a space area existing between adjacent characters;
interline scale information including information related to spacing between text lines determined at each position of the plurality of characters; and
orientation information including information about an angle a text line determined at each position of the plurality of characters.

11. The character recognition method of claim 9 or 10, wherein the recognizing of the text lines comprises:

defining respective element areas for characters determined based on the character area information; and
recognizing the text lines in the image based on whether the defined element areas are connected or overlapped with each other.

12. The character recognition method of any one of claims 9 to 11, wherein the recognizing of the text lines comprises:

defining a first element area corresponding to an initial element area for each of the characters determined based on the character area information; and
clustering the characters into a text line candidate set based on whether the defined first element areas are connected or overlapped with each other,
wherein a center position of the first element area corresponds to a center position of a corresponding character, and a rotation angle of the first element area corresponds to orientation information of the corresponding character.

13. The character recognition method of any one of claims 9 to 12, wherein the recognizing of the text lines comprises:

clustering the characters into a text line candidate set based on whether second element areas obtained by increasing a size of the first element areas are connected or overlapped with each other; and
recognizing text lines for the characters included in the image based on a clustering result.

14. The character recognition method of claim 12 or 13, wherein the recognizing of the text lines comprises:

when the clustering result satisfies a certain condition, clustering the characters into a text line candidate set based on whether third element areas obtained by increasing a size of the second element areas are connected or overlapped with each other; and,
when the clustering result does not satisfy a certain condition, recognizing each of clustered text line candidate sets based on the first element area as one text line.

15. The character recognition method of any one of claims 9 to 14, wherein the obtaining of the layout information comprises:

generating paragraph information obtained by dividing paragraphs of the text in the image based on spacing between the recognized text lines; and
generating line number information obtained by dividing line numbers based on a y-axis intercept and center coordinate of each of the recognized text lines.

# FIG. 1

1

```
          ┌─10─────────┐      ┌─20──────────┐
          │   LAYOUT    │      │  CHARACTER   │
IMAGE ──→ │ RECOGNITION │ ──→  │ RECOGNITION  │ ──→ RESULT DATA
          │    UNIT     │      │     UNIT      │
          └─────────────┘      └──────────────┘
```

FIG. 2

EP 4 675 581 A1

# FIG. 3

110

112

CHARACTER-
RELATED
INFORMATION
EXTRACTION
MODEL

IMAGE →

→ CHARACTER AREA INFORMATION
→ INTER-CHARACTER SPACE AREA INFORMATION
→ INTERLINE SCALE INFORMATION
→ ORIENTATION INFORMATION

# FIG. 4

400

CHARACTER-
RELATED
INFORMATION
EXTRACTION
MODEL

112

410

420

# FIG. 5

EP 4 675 581 A1

# FIG. 6A

~ 600

## 1.1 What is computer vision?

As humans, we perceive the three-dimensional structure of the world around us with apparent ease. Think of how vivid the three-dimensional percept is when you look at a vase of flowers sitting on the table next to you. You can tell the shape and translucency of each petal through the subtle patterns of light and shading that play across its surface and effortlessly segment each flower from the background of the scene (Figure 1.1). Looking at a framed group portrait, you can easily count (and name) all of the people in the picture and even guess at their emotions from their facial appearance. Perceptual psychologists have spent decades trying to understand how the visual system works and, even though they can devise optical illusions[1] to tease apart some of its principles (Figure 1.3), a complete solution to this puzzle remains elusive (Marr 1982; Palmer 1999; Livingstone 2008).

# FIG. 6B

~ 610

## FIG. 7

EP 4 675 581 A1

## FIG. 8

800

As humans, we perceive
ease. Think of how vivid

Input

810

$(x_p, y_p)$
$(x_1, y_1)$
$(x_0, y_0)$
S1
S2

State: initialized

820

$(x_p, y_p)$
$(x_1, y_1)$
$(x_0, y_0)$
S1
S2

State: optimized

830

$(x_1, y_1)$
$(x_0, y_0)$
S1
S2
$(x_p, y_p)$

State: Over clustered

EP 4 675 581 A1

## FIG. 9

# FIG. 10

EXTRACT CHARACTER-RELATED INFORMATION FROM INPUT IMAGE — S100

OBTAIN WORD DIVISION INFORMATION THAT DIVIDES CHARACTERS INCLUDED IN IMAGE INTO WORD UNITS BASED ON EXTRACTED CHARACTER-RELATED INFORMATION — S110

CLUSTER CHARACTERS INTO SAME TEXT LINE UNITS BASED ON EXTRACTED CHARACTER-RELATED INFORMATION — S120

OBTAIN LAYOUT INFORMATION BASED ON CLUSTERING RESULT — S130

RECOGNIZE EACH CHARACTER INCLUDED IN IMAGE — S140

OBTAIN TEXT DATA BY ARRANGING RECOGNIZED CHARACTERS BASED ON LAYOUT INFORMATION — S150

# FIG. 11

<u>1100</u>

COMMUNICATION UNIT 1110

INPUT UNIT 1120

OUTPUT UNIT 1130

CONTROL UNIT 1140

MEMORY 1150

Europäisches
Patentamt

European
Patent Office

Office européen
des brevets

# EUROPEAN SEARCH REPORT

**Application Number**

EP 25 15 5286

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | YOUNGMIN BAEK ET AL: "Character Region Attention For Text Spotting", ARXIV.ORG, CORNELL UNIVERSITY LIBRARY, 201 OLIN LIBRARY CORNELL UNIVERSITY ITHACA, NY 14853, 19 July 2020 (2020-07-19), XP081723628, * Section 1; page 2 * * Abstract; page 1 * * Section 3.2; page 4 - page 5 * * Section 3.2; page 6 * * Section 3.4; page 7 - page 8 * ----- | 1-15 | INV. G06V30/146 G06V30/148 G06V10/82 G06V30/414 |
| X | O'GORMAN L: "THE DOCUMENT SPECTRUM FOR PAGE LAYOUT ANALYSIS", IEEE TRANSACTIONS ON PATTERN ANALYSIS AND MACHINE INTELLIGENCE, IEEE COMPUTER SOCIETY, USA, vol. 15, no. 11, 1 November 1993 (1993-11-01), pages 1162-1173, XP000413107, ISSN: 0162-8828, DOI: 10.1109/34.244677 | 9-12,15 | |
| A | * Section I; page 1162 * * Section III; page 1165 * * Section III.B; page 1164 - page 1165 * * Section III.E; page 1167 * * Section III.F; page 1168 * ----- -/-- | 1-8,13, 14 | |

TECHNICAL FIELDS
SEARCHED (IPC)

G06V

The present search report has been drawn up for all claims

| Place of search | Date of completion of the search | Examiner |
|---|---|---|
| The Hague | 26 May 2025 | Gissot, Samuel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

## EUROPEAN SEARCH REPORT

**Application Number**

EP 25 15 5286

### DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | KOO HYUNG IL: "Text-Line Detection in Camera-Captured Document Images Using the State Estimation of Connected Components", IEEE TRANSACTIONS ON IMAGE PROCESSING, IEEE, USA, vol. 25, no. 11, 1 November 2016 (2016-11-01), pages 5358-5368, XP011623917, ISSN: 1057-7149, DOI: 10.1109/TIP.2016.2607418 [retrieved on 2016-09-23] * the whole document * ----- | 1-15 | |
| A | FENG WEI ET AL: "TextDragon: An End-to-End Framework for Arbitrary Shaped Text Spotting", 2019 IEEE/CVF INTERNATIONAL CONFERENCE ON COMPUTER VISION (ICCV), IEEE, 27 October 2019 (2019-10-27), pages 9075-9084, XP033723342, DOI: 10.1109/ICCV.2019.00917 [retrieved on 2020-02-24] * the whole document * ----- | 1-15 | TECHNICAL FIELDS SEARCHED (IPC) |
| A | LONG SHANGBANG ET AL: "Hierarchical Text Spotter for Joint Text Spotting and Layout Analysis", 2024 IEEE/CVF WINTER CONFERENCE ON APPLICATIONS OF COMPUTER VISION (WACV), IEEE, 3 January 2024 (2024-01-03), pages 892-902, XP034583344, DOI: 10.1109/WACV57701.2024.00095 [retrieved on 2024-04-09] * the whole document * ----- | 1-15 | |

The present search report has been drawn up for all claims

| Place of search | Date of completion of the search | Examiner |
|---|---|---|
| The Hague | 26 May 2025 | Gissot, Samuel |